# DEMANDE DE BREVET EUROPEEN

(11) **EP 4 734 447 A1**
(43) Date de publication de la demande: **29.04.2026**
(21) Numéro de dépôt: 25207518.9
(22) Date de dépôt: 08.10.2025
(51) Int. Cl.: H04L 9/40, H04L 65/403

(54) **COMMUNICATIONS CHIFFRÉES**

(30) Priorité: 25.10.2024 FR 2411709
(71) Demandeur: Streamwide, 75010 Paris (FR)
(72) Inventeur: BODILIS, Pierre, 75019 PARIS (FR)
(74) Mandataire: Plasseraud IP

(57) **Abrégé**

Des exemples présentent des solutions permettant d'opérer un chiffrement de bout en bout.

## Description

### Domaine technique

La présente divulgation concerne le domaine des communications chiffrées.

### Technique antérieure

La sécurité des communications est un enjeu dans différents secteurs industriels. En particulier, de nombreuses informations sont désormais échangées par le biais de sessions de conférence. Ces sessions sont en général temps réels et impliquent plusieurs participants connectés à la session de conférence via un dispositif électronique. Le chiffrement des communications lors de ces sessions de conférence peut s'avérer complexe.

La présente divulgation vient améliorer cette situation.

### Résumé

A cet égard, il est proposé un procédé d'échange de données chiffrées de bout en bout entre un premier terminal et un deuxième terminal participant à une session de conférence gérée par un serveur média dans lequel un canal de communication est établi entre le serveur média et un navigateur du premier terminal, et dans lequel le procédé comprend :
un premier chiffrement, par le deuxième terminal, d'un flux multimédia, à partir d'une première clé de chiffrement associée à la session de conférence ;
un envoi, par le deuxième terminal à destination du serveur média, du flux multimédia chiffré;
un deuxième chiffrement, par le serveur média, du flux multimédia déjà chiffré à l'aide d'une clé de chiffrement négociée entre le navigateur du premier terminal et le serveur média pour communiquer sur le canal de communication ; puis
un envoi, par le serveur média à destination du premier terminal, du flux multimédia.

Optionnellement, le procédé comprend en outre un premier déchiffrement, par le premier terminal, du flux multimédia reçu du serveur média, à partir de la clé de chiffrement négociée entre le navigateur du premier terminal et le serveur média ; et
un deuxième déchiffrement, par le premier terminal, du flux multimédia à partir d'une deuxième clé de chiffrement permettant de déchiffrer un flux multimédia chiffré par la première clé de chiffrement.

Optionnellement, le deuxième déchiffrement comprend :
un chargement d'un fichier bytecode comprenant une fonction de déchiffrement d'un flux de données ; et
une exécution de la fonction de déchiffrement sur le flux multimédia.

Optionnellement, le navigateur du premier terminal comprend en outre un module de codage permettant d'encoder ou de décoder des flux multimédia à partir d'une pluralité de codecs, dans lequel le procédé comprend en outre :
un encodage, par le deuxième terminal, du flux multimédia à partir d'un premier codec ; et
lorsque le premier codec appartient à la pluralité de codecs :
   un décodage du flux multimédia à partir du module de codage du navigateur.

Optionnellement, lorsque le premier codec n'appartient pas à la pluralité de codecs pris en charge par le module de codage, le procédé comprend en outre :
un chargement d'un fichier bytecode comprenant une fonction de décodage d'un flux de données encodé à partir du premier codec; et
une exécution de la fonction de décodage sur le flux multimédia encodé par le premier codec.

Optionnellement, le canal de communication entre le serveur média et le navigateur est établi conformément à un protocole WebSocket ;
et un envoi, par le serveur média à destination du premier terminal, du flux multimédia par le canal de communication établi entre le serveur média et le navigateur du premier terminal comprend :
une écriture du flux multimédia dans le canal de communication établi entre le serveur média et le navigateur.

La demande porte également sur un terminal adapté pour se connecter à une session de conférence gérée par un serveur média, le terminal comprenant un navigateur, dans lequel le terminal est configuré pour :
appliquer un premier chiffrement d'un flux multimédia à partir d'une troisième clé de chiffrement associée à la session de conférence ;
appliquer un deuxième chiffrement du flux multimédia chiffré à partir de la troisième clé de chiffrement, à partir d'une clé de chiffrement négociée entre le navigateur et le serveur média pour chiffrer les flux multimédia échangés entre le serveur média et le navigateur ; et
transmettre le flux multimédia chiffré au serveur média.

Optionnellement, le terminal peut également être configuré pour :
obtenir, du serveur média, un flux multimédia chiffré une première fois à partir d'une première clé de chiffrement d'un autre terminal participant à la conférence, et chiffré une deuxième fois à partir d'une clé de chiffrement négociée entre le navigateur et le serveur média pour chiffrer les flux multimédia échangés entre le serveur média et le navigateur ;
appliquer un premier déchiffrement du flux multimédia reçu du serveur média, à partir de la clé de chiffrement négociée entre le navigateur et le serveur média ; et
appliquer un deuxième déchiffrement du flux multimédia reçu du serveur média, à partir d'une deuxième clé de chiffrement permettant de déchiffrer un flux multimédia chiffré par la première clé de chiffrement.

Optionnellement, l'application du deuxième déchiffrement du flux multimédia comprend :
un chargement d'un fichier bytecode comprenant une fonction de déchiffrement d'un flux de données ; et
une exécution de la fonction de déchiffrement sur le flux multimédia.

La demande porte en outre sur un serveur média configuré pour gérer une session de conférence à laquelle au moins un premier terminal et un deuxième terminal participent, dans lequel le serveur média est configuré pour :
recevoir, du deuxième terminal, un flux multimédia chiffré à transmettre aux autres participants à la session de conférence; et
appliquer un chiffrement du flux multimédia déjà chiffré à l'aide d'une clé de chiffrement négociée avec un navigateur du premier terminal.

La demande porte en outre sur un produit programme d'ordinateur comportant des instructions pour la mise en œuvre de tout ou partie de l'un quelconque des procédés présentés par la présente divulgation lorsque ce programme est exécuté par un processeur.

Enfin, la demande porte sur un support d'enregistrement non transitoire lisible par un ordinateur sur lequel est enregistré un programme pour la mise en œuvre de tout ou partie de l'un quelconque des procédés présentés par la présente divulgation lorsque ce programme est exécuté par un processeur.

### Brève description des dessins

D'autres caractéristiques, détails et avantages apparaîtront à la lecture de la description détaillée ci-après, et à l'analyse des dessins annexés, sur lesquels :
[Fig. 1] représente schématiquement un exemple d'architecture de communication selon la présente divulgation.
[Fig. 2] représente schématiquement un exemple de terminal selon la présente divulgation.
[Fig. 3] représente schématiquement un exemple d'un premier terminal selon la présente divulgation.
[Fig. 4] représente schématiquement un exemple d'un serveur média selon la présente divulgation.
[Fig. 5] représente schématiquement un exemple de procédé d'échange de données chiffrées de bout en bout.
[Fig. 6] représente schématiquement un autre exemple de procédé d'échange de données chiffrées de bout en bout.
[Fig. 7] représente schématiquement encore un autre exemple de procédé d'échange de données chiffrées de bout en bout.
[Fig. 8] représente schématiquement encore un autre exemple de procédé d'échange de données chiffrées de bout en bout.
[Fig. 9] représente schématiquement encore un autre exemple de procédé d'échange de données chiffrées de bout en bout.
[Fig. 10] représente schématiquement des exemples d'opérations pouvant être mises en œuvre par un terminal selon la présente divulgation.

### Description des modes de réalisation

L'inventeur a noté que les sessions de conférence permettant l'échange de flux de données audio ou vidéo pouvaient impliquer des participants utilisant les fonctionnalités offertes par les navigateurs pour traiter et lire les flux de données échangés. Les échanges de flux de données dans ces sessions de conférence s'appuient sur le protocole Real-Time Transport Protocole (RTP), c'est-à-dire que ces échanges de données sont conformes à la norme RFC 3550.

Or, le fait d'utiliser un navigateur pour échanger des flux de données avec un serveur média (qui correspond au serveur permettant la gestion de la session de conférence, notamment la redirection des flux de données vers les participants) ajoute de la complexité aux échanges de données dans la mesure où les moyens de communiquer avec un navigateur sont limités, et sont sujets à des normes. Aussi, bien que l'utilisation d'un navigateur pour participer à ce type de conférence soit avantageuse, cette utilisation complexifie les transferts des flux de données durant la session de conférence. Il est notamment avantageux d'utiliser un navigateur dans la mesure où les différents navigateurs proposés sont maintenus et régulièrement mis à jour par leur éditeur respectif et proposent des performances intéressantes dans le cadre du traitement et de la lecture des flux de données temps réels échangés lors de la session de conférence. Par ailleurs, la plupart des ordinateurs sont directement vendus avec une application de type navigateur de sorte qu'il n'est pas nécessaire à une personne possédant un ordinateur de télécharger une application dédiée pour participer à une session de conférence.

L'inventeur a notamment remarqué que lorsqu'un premier participant à la session de conférence utilise un navigateur, la session de conférence ne permettait pas de proposer un chiffrement de bout en bout d'un flux de données émis par un deuxième participant à destination du premier participant. En effet, l'inventeur a astucieusement remarqué que le flux de données transmis par le deuxième participant et chiffré par une clé de chiffrement utilisée dans le cadre de la session de conférence était déchiffré par le serveur média, avant d'être rechiffré en utilisant une clé négociée entre le serveur média et le navigateur du premier participant. Par conséquent, le flux de données transmis par le deuxième participant au premier participant de la session de conférence n'est pas un flux de données chiffré de bout en bout puisqu'il est à un moment déchiffré par le serveur média, avant d'être chiffré à nouveau et transmis sur le canal de communication existant entre le serveur média et le navigateur.

En particulier, lorsque le canal de communication entre le serveur média et le navigateur du premier participant utilise une interface de programme d'application (désignée *par « Application Programming Interface* » en anglais et par « API » dans la suite de la présente divulgation) WebRTC (décrit notamment dans la norme RFC 8835), la spécification des canaux de communication proposés pour communiquer des flux audios et/ou vidéos en utilisant l'API WebRTC ne permet pas de transmettre des flux de données autres que des flux de données audio et/ou vidéo conformes au protocole RTP (non chiffrés), qui sont ensuite chiffrées pour être conformes au protocole via la clé négociée selon le protocole DTLS-SRTP entre le serveur média, agissant comme un client WebRTC, et le navigateur.

La présente divulgation vient à ce titre proposer une solution qui permet d'opérer un chiffrement de bout en bout dans le cadre d'une session de conférence même dans des situations dans lesquels un participant utilise un navigateur pour participer à la session de conférence, et même dans des situations dans lesquelles le navigateur utilise l'API WebRTC pour communiquer avec le serveur. En particulier, la solution propose de transmettre directement le flux chiffré avec une première clé de chiffrement associée à la session de conférence via le canal de communication entre le serveur média et le navigateur, lequel flux chiffré une première fois donc chiffré à nouveau en utilisant la clé de chiffrement négociée entre le serveur média et le navigateur.

Le navigateur déchiffrera ensuite ce flux à deux reprises, où un premier déchiffrement utilisera la clé négociée entre le serveur média et le navigateur, et un deuxième déchiffrement utilisera une deuxième clé associée à la session de conférence, comme détaillé dans la suite. Notamment, le navigateur, et plus précisément le moteur JavaScript du navigateur pourra exécuter des instructions de code permettant d'opérer le deuxième déchiffrement à partir de la deuxième clé associée à la session de conférence de sorte que le flux de données sera chiffré de bout en bout entre le premier participant et le deuxième participant.

Par ailleurs, dans la mesure où une fonction comprenant des instructions de code permettant de déchiffrer le flux de données a déjà été développée pour les participants n'utilisant pas de navigateur, la solution peut également proposer de réutiliser cette fonction, stockée dans un fichier dédié sous forme de bytecode, qui sera chargé par le moteur JavaScript du navigateur et qui pourra être exécutée depuis le moteur JavaScript. Ainsi, plutôt que de développer une nouvelle fonction en JavaScript permettant le déchiffrement du flux de données, ce qui nécessite de maintenir deux codes différents, le code est réutilisé et l'exécution d'un tel code sous forme de bytecode permet une exécution plus rapide de la fonction de déchiffrement par rapport à cette fonction interprétée et exécutée à partir d'instructions en JavaScript.

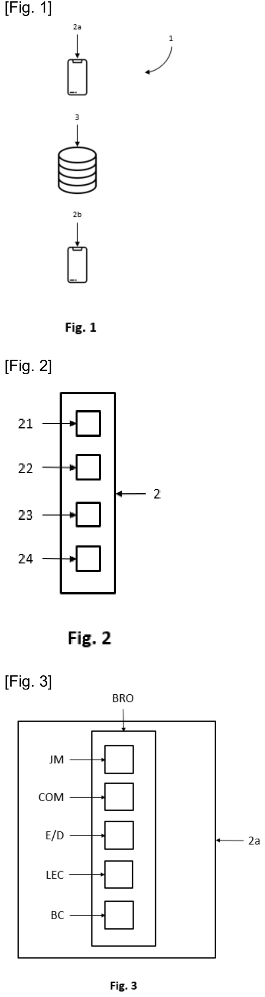

Il est maintenant décrit en référence à la figure 1 un exemple d'architecture de communication 1 dans laquelle une session de conférence permettant l'échange de flux de données multimédia peut être mise en œuvre.

Un flux de données, ou un flux, est défini dans la présente divulgation comme correspondant à au moins deux paquets de données successifs. Un flux de données audio, ou flux audio, est défini comme correspondant à au moins deux paquets de données audio successifs. Un flux de données vidéo, ou flux vidéo, est défini comme correspondant à au moins deux paquets de données vidéo successifs.

Un flux multimédia peut correspondre, dans la présente divulgation, à un flux de données audio ou à un flux de données vidéo. Dans des conférences audio-vidéo, il est donc transmis à la fois un flux de données audio, et un flux de données vidéos, c'est-à-dire deux flux multimédias de type différent.

L'architecture de communication 1 comprend un serveur média 3, un premier terminal 2a et un deuxième terminal 2b. L'architecture de communication 1 peut comprendre plus de deux terminaux 2, et peut comprendre autant de terminaux qu'il y a de participants à la session de conférence. Toutefois, la présente demande de brevet se limite à une représentation de l'architecture avec deux terminaux 2 dès lors que la solution proposée par la présente divulgation peut être comprise simplement avec deux terminaux 2.

La session de conférence permet d'échanger, en quasi-temps réel, des flux multimédias entre les terminaux. Les flux multimédias émis par des terminaux émetteurs durant la session de conférence sont envoyés au serveur média 3 qui peut les distribuer à destination des terminaux destinataires participant à la session de conférence. Le serveur média 3 est parfois désigné par « serveur de session » en français ou par « media server » en anglais.

Il doit être noté qu'un terminal émetteur d'un premier flux multimédia peut, ultérieurement ou simultanément, être un terminal destinataire d'un deuxième flux multimédia émis par un autre terminal émetteur participant à la session de conférence.

Dans une première alternative, la session de conférence peut ainsi désigner une audioconférence dans laquelle des terminaux peuvent être amenés à échanger, en quasi temps réel, des flux audios par l'intermédiaire d'un serveur média 3.

Dans une deuxième alternative, la session de conférence peut désigner une visioconférence dans laquelle des terminaux peuvent être amenés à échanger, en quasi temps réel, des flux vidéos par l'intermédiaire d'un serveur média 3.

Dans une troisième alternative, la session de conférence peut désigner une conférence audio-vidéo dans laquelle des terminaux peuvent être amenés à échanger, en quasi temps réel, des flux audios et vidéos par l'intermédiaire d'un serveur média 3.

Il est à noter que dans la première ou la troisième alternative, les flux audios peuvent par exemple correspondre à des communications à l'alternat. Les communications à l'alternat, plus généralement connues sous la dénomination anglaise Push-To-Talk ou Press-to-transmit, sont des communications de type bidirectionnel à l'alternat (non simultanée) reposant sur l'actionnement d'un bouton physique ou virtuel par un utilisateur pour passer d'un mode réception à un mode émission et *vice versa.* Ces communications utilisent des canaux de communication en semi-duplex (« half-duplex » en anglais).

Un terminal peut ainsi correspondre à un appareil de communication fixe ou mobile. Un appareil de communication est mobile au sens où il n'est pas relié, ni physiquement par l'intermédiaire d'un câble, ni à faible distance, par exemple via l'utilisation d'un protocole Wi-Fi, NFC ou encore Bluetooth, à un réseau de communication. L'appareil de communication mobile est en revanche adapté pour communiquer des données sur de longues distances via un réseau de télécommunication, par exemple un réseau mobile, de telle sorte qu'il peut échanger des données en itinérance. Un appareil de communication mobile peut par exemple correspondre à un téléphone portable.

Lors de la session de conférence, les paquets de données des flux multimédias émis par les terminaux sont encapsulés selon un protocole internet. Ce protocole est notamment défini dans la norme RFC 791.

Dans la présente divulgation, les flux de données échangés par les terminaux lors de la session de conférence peuvent être encapsulés selon un protocole SRTP (« Secure Real-time Transport Protocol »). Un flux de données encapsulé selon un protocole SRTP doit être compris dans la présente demande comme un flux de données agencé de façon à respecter un protocole SRTP, c'est-à-dire de façon à respecter un protocole notamment défini dans la norme RFC 3711.

Un flux multimédia émis par un terminal émetteur lors de la session de conférence est par ailleurs encodé par un codec d'encodage mis en œuvre par le terminal émetteur. En fonction du type de données du flux multimédia, audio ou vidéo, les codecs d'encodage sont différents.

Dans des exemples, un codec d'encodage audio peut correspondre à l'un parmi les suivants : GSM, iLBC, Speex, AMR-WB, EVS, OPUS. Dans des exemples, un codec d'encodage vidéo peut correspondre à l'un parmi les suivants : VP8, VP9, AV1, H264.

Un terminal 2 peut comprendre un processeur 21 et une mémoire 22. Le processeur 21 peut être adapté pour implémenter des fonctions mises en œuvre par le terminal 2. En d'autres termes, un processeur du premier terminal 2a peut être configuré pour implémenter des fonctions mises en œuvre par le premier terminal 2a tandis qu'un processeur du deuxième terminal 2b peut être configuré pour implémenter des fonctions mises en œuvre par le deuxième terminal 2b. Le processeur 21 peut par exemple être un microprocesseur. Le processeur 21 peut notamment être un composant d'un circuit intégré, notamment un composant d'un microcontrôleur, un composant d'un FPGA (Field-Programmable Gate Array) ou un composant d'un ASIC (Application-Specific Integrated circuit).

La mémoire 22 peut stocker des instructions de code exécutées par le processeur 21. La mémoire 22 peut par exemple comprendre une mémoire ROM (Read-Only Memory), une mémoire RAM (Random Access Memory), une mémoire EEPROM (Electrically Erasable Programmable Read-Only Memory) ou tout autres types de moyens de stockage adaptés. La mémoire peut par exemple comprendre des moyens de stockage optique, électronique ou encore magnétique.

Un terminal 2 peut également comprendre un microphone 23 pour acquérir un flux audio.

Un terminal 2 peut également comprendre une caméra 24 pour acquérir un flux vidéo.

Un exemple de terminal 2 comprenant un processeur 21, une mémoire 22, un microphone 23 et une caméra 24 est notamment illustré en figure 2.

Un exemple d'un premier terminal 2a est représenté en figure 3. Dans cet exemple, le terminal 2a comprend un navigateur BRO.

Le navigateur BRO, également désigné *« browser »* en anglais, désigne une unité logicielle conçue pour consulter et afficher le Word Wide Web, notamment par l'interprétation et l'exécution d'instructions de code en langage JavaScript. Le navigateur BRO correspond ainsi à un logiciel mettant en œuvre des requêtes HTTP (Hypertext Transfer Protocol) permettant de se connecter à des serveurs HTTP (serveurs web). Le navigateur BRO correspond par exemple aux navigateurs connus du grand public. Le navigateur BRO peut comprendre plusieurs modules développés par des éditeurs respectifs qui seront notamment détaillés dans la suite. Par conséquent, en s'appuyant sur un navigateur BRO existant, il devient inutile de développer et maintenir des modules déjà proposés par le navigateur.

Une unité logicielle peut notamment être implémentée par le processeur 21 d'un terminal. Par conséquent, le navigateur BRO peut être implémenté par le processeur 21 du premier terminal 2a.

Le navigateur BRO comprend un moteur JavaScript JM, qui désigne l'unité logicielle permettant l'interprétation et l'exécution d'instructions de code en langage JavaScript afin d'exécuter les différentes fonctions et modules du navigateur BRO.

Le navigateur BRO comprend également un module de communication COM lui permettant de communiquer avec le serveur média 3. Auquel cas, le serveur média 3 peut comprendre un module de communication correspondant. Le module de communication COM permet l'établissement d'un canal de communication chiffré entre le navigateur BRO du premier terminal 2a et le serveur média 3. La création du canal de communication chiffré entre le premier terminal 2a et le serveur média 3 peut être à l'initiative du serveur média 3 (via son module de communication) ou à l'initiative du premier terminal 2a. Le module de communication COM du navigateur du premier terminal 2a permet notamment d'échanger (i.e. envoyer et recevoir) des flux multimédia avec le serveur média 3.

Dans une première alternative, le module de communication COM peut par exemple comprendre une API WebRTC. Le serveur média 3 peut alors également comprendre une API WebRTC pour communiquer avec l'API WebRTC correspondante du premier terminal 2a. Dans cette première alternative, une clé de chiffrement permettant de chiffrer les échanges sur le canal de communication est négociée entre le serveur média 3 et le navigateur BRO du premier terminal 2a selon un protocole DTLS-SRTP (Datagram Transport Layer Security-Secure Real Time Protocol) notamment défini par la norme RFC 5764. Il est à noter que les flux de données multimédia sont échangés via un canal de données (« Datachannel » dans la spécification de l'API WebRTC) de l'API WebRTC, et non pas via la fonction définie pour transmettre des flux multimédia selon la spécification de l'API WebRTC. En effet, la spécification de l'API WebRTC définit une fonction permettant de transmettre des flux multimédia, mais cette fonction ne permet pas de transmettre des flux multimédia déjà chiffrés. L'inventeur a donc astucieusement détourné l'utilisation de l'API WebRTC pour transmettre les flux multimédia chiffrés via un canal de communication particulier, appelé canal de données (Datachannel) dans l'API WebRTC, en lieu et place de la fonction définie par l'API WebRTC pour transmettre ces flux multimédia, qui dans la mesure où cette fonction ne permet pas de transmettre des flux déjà chiffrés, demande de déchiffrer le flux avant de le retransmettre, et donc ne permet pas un chiffrement de bout en bout.

Dans une deuxième alternative, le module de communication COM peut par exemple comprendre un module WebSocket permettant d'établir la communication avec le serveur média 3 conformément au protocole WebSocket. Le protocole WebSocket est notamment défini dans la norme RFC 6455. Dans cette deuxième alternative, une clé de chiffrement permettant de chiffrer les échanges sur le canal de communication est négociée entre le serveur média 3 et le navigateur BRO du premier terminal 2a selon un protocole TLS (Transport Layer Security) notamment défini par la norme RFC 8446 pour sa version 1.3 (d'autres versions peuvent bien entendu être envisagées). Le canal de communication créé conformément au protocole WebSocket permet d'échanger les flux multimédia chiffrés sans avoir à les déchiffrer avant de les rechiffrer via la clé négociée selon le protocole TLS. Il est à noter que l'utilisation du protocole WebSocket pour transmettre des flux multimédia de session de conférence, qui doivent être transmis en quasi temps-réel, est une utilisation ingénieuse de ce protocole qui n'est pas prévue pour ce type de communication à l'origine. En effet, le protocole WebSocket est configuré pour échanger des paquets de données conformément au protocole TCP (Transmission Control Protocol, défini notamment dans la norme RFC 793), qui n'est pas le protocole privilégié pour échanger des paquets de données SRTP. Plus précisément, la transmission de données selon le protocole UDP (User Datagram Protocol) présente moins de latence que le protocole TCP et n'interrompt pas le flux de données en cas de perte de paquets, au contraire du protocole TCP, de sorte que le protocole TCP n'est pas retenu pour les communications temps réels. Il s'agit donc dans cette deuxième alternative d'utiliser astucieusement du protocole WebSocket pour transmettre des paquets de données SRTP en utilisant le protocole TCP.

Dans des exemples, le navigateur BRO peut comprendre un module de codage E/D qui correspond à une unité logicielle permettant d'encoder des flux multimédia ou de décoder des flux multimédia. Plus précisément, le module de codage E/D est configuré pour permettre l'encodage et le décodage d'un flux de données à partir d'une pluralité de codecs pris en charge par le module E/D. Un module de codage E/D pour le navigateur BRO peut par exemple correspondre à une API WebCodecs. L'API WebCodecs est un standard proposé par le Word Wide Web Consortium (W3C) qui permet d'opérer des opérations de décodage et d'encodage de flux multimédia via un navigateur.

Dans des exemples, le navigateur BRO peut comprendre un module de lecture LEC du flux multimédia. Le module de lecture LEC est une unité logicielle qui peut notamment lire un flux de données multimédia décodé. Le flux de données multimédia peut par exemple être décodé par le module de codage E/D puis fournit au module de lecture LEC pour lecture. Le module LEC peut notamment comprendre un module de lecture de flux audio et/ou un module de lecture de flux vidéo en fonction de la nature de la session de conférence. Le module de lecture LEC de flux audio peut par exemple comprendre une API WebAudio qui permet de lire un flux audio formaté notamment selon une modulation par impulsion codées (« Pulse Code Modulation » ou PCM en anglais).

Dans des exemples, le navigateur BRO peut également comprendre un module bytecode BC. Un module bytecode BC peut correspondre à une unité logicielle permettant au moteur JavaScript JM de charger et d'utiliser des fonctions comprises dans un fichier bytecode. A cet égard, le module bytecode BC peut être implémenté directement dans le moteur Javascript JM, ou peut être un module différent du moteur JavaScript JM qui peut être utilisé par le moteur JavaScript JM, comme représenté sur la figure 3.

Un fichier bytecode désigne un fichier comprenant des données représentées sous forme de bytecode, c'est-à-dire des données présentant un format intermédiaire entre le code source, écrit par un développeur ou par un modèle intelligent, et le code machine, exécuté par un processeur. Le bytecode est parfois désigné par « code intermédiaire » ou « code octet » dans la littérature technique. Ainsi, un fichier bytecode peut notamment correspondre à un fichier comprenant des instructions de code déjà compilées.

Un fichier bytecode peut donc comprendre une ou plusieurs fonctions, notamment une bibliothèque de fonctions, qui, une fois importées par le moteur JavaScript à l'aide du module bytecode BC, peuvent être utilisées par le moteur JavaScript JM. L'avantage du module bytecode BC est qu'il permet d'utiliser des fonctions codées dans d'autres langages de programmation que le JavaScript, précompilées et stockées dans un fichier bytecode, de sorte que lorsque ces fonctions sont exécutées par le moteur JavaScript, elles sont exécutées plus rapidement. Par ailleurs, comme mentionné précédemment, cela permet également d'éviter de maintenir des fonctions destinées à faire la même chose dans plusieurs langages de programmation différents.

Dans ces exemples, le module bytecode BC peut comprendre un module permettant au moteur Javascript JM de charger et d'utiliser des fonctions comprises dans un fichier de type WebAssembly. Un fichier de type WebAssembly présente une extension de fichier de la forme «.wasm ». Le WebAssembly est un standard proposé par le Word Wide Web Consortium. Il est à noter que le module bytecode BC peut bien évidemment comprendre d'autres modules permettant au moteur Javascript JM de charger et d'utiliser des fonctions comprises dans d'autres types de fichiers bytecode que le WebAssembly.

Le premier terminal 2a peut ainsi stocker un fichier bytecode, par exemple dans sa mémoire 22, comprenant une fonction de déchiffrage d'un flux multimédia. La fonction de déchiffrage peut notamment déchiffrer le flux multimédia à partir d'une clé de chiffrement associée à la session de conférence. Le fichier bytecode stocké peut par exemple correspondre à un fichier de type WebAssembly.

Lorsqu'il est fait mention dans la présente divulgation d'une clé de chiffrement associée à la session de conférence, au moins deux options différentes peuvent être envisagées pour accéder à cette clé de chiffrement.

Dans une première option, une même clé de chiffrement est partagée à l'ensemble des terminaux participant à la session de conférence. Auquel cas, un terminal émetteur chiffre un flux de données multimédia qu'il transmet à l'aide de cette clé de chiffrement, et un terminal récepteur déchiffre un flux de données multimédia qu'il reçoit à partir de cette clé. Dans cette première option, le chiffrement des flux de données de la session de conférence est symétrique.

Dans une deuxième option, un terminal spécifique participant à la session de conférence obtient une clé de chiffrement publique avec laquelle il chiffre les flux de données qu'il transmet. Par ailleurs, chacun des autres terminaux participant à la session de conférence (i.e. les terminaux autres que le terminal spécifique) obtient une clé de chiffrement privée (ou des informations permettant de retrouver la clé de chiffrement privée), associée à la clé de chiffrement publique du terminal spécifique, et permettant de déchiffrer des flux de données émis par le terminal spécifique chiffrés par la clé publique. Par conséquent, chaque terminal de la session de conférence stocke une clé publique, et au moins une clé privée (en pratique une pluralité de clés privées), où chaque clé privée est associée à une clé publique d'un autre terminal participant à la session de conférence. Ainsi, un terminal donné de la session de conférence peut déchiffrer, avec la clé privée associée à la clé publique d'un autre terminal de la session de conférence, les flux de données transmis par cet autre terminal. Dans cette deuxième option, le chiffrement des flux de données de la session de conférence est asymétrique.

Les clés de chiffrement, que ce soit dans le cadre d'un chiffrement symétrique ou asymétrique, peuvent être transmises aux terminaux de la session de conférence par le serveur média 3, ou par un serveur de management de clés, également connu sous la dénomination anglaise Key Management System (KMS). Lorsqu'une clé privée n'est pas transmise directement à un terminal, des informations permettant de déterminer cette clé privée au niveau du terminal peuvent être transmises par le serveur média 3 ou le serveur de management de clés (KMS).

Dans des exemples, le fichier bytecode comprenant la fonction de déchiffrage peut également comprendre une fonction de décodage d'un flux multimédia encodé à partir d'un premier codec, et éventuellement à partir d'autres codecs. Dans d'autres exemples, le terminal 2a stocke un autre fichier bytecode comprenant la fonction de décodage d'un flux multimédia encodé à partir du premier codec et éventuellement à partir d'autres codecs. Le premier codec peut notamment correspondre à un codec AMR-WB, EVS ou OPUS. La fonction de décodage permet par exemple de décoder un flux multimédia encodé avec un certain codec, de façon à avoir accès à un flux audio permettant sa lecture par un lecture audio, notamment par le lecteur LEC. La fonction de décodage du fichier bytecode peut ainsi permettre de décoder des flux de données audio encodées avec des codecs qui ne sont pas proposés par la pluralité de codecs pris en charge par le module C/D du navigateur.

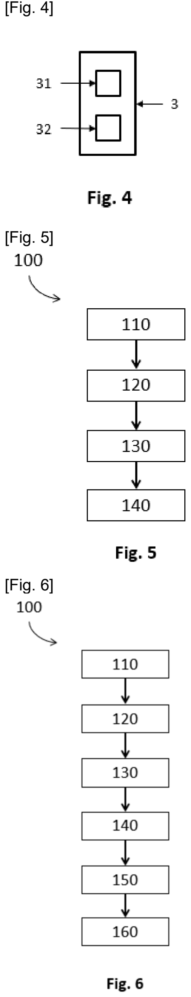

Un serveur média 3 peut comprendre un processeur 31 et une mémoire 32. Un exemple de serveur média 3 comprenant un processeur 31 et une mémoire 32 est notamment illustré en figure 4. Le processeur 31 peut être adapté pour implémenter des fonctions mises en œuvre par le serveur média 3 dans la présente divulgation. Le processeur 31 peut par exemple être un microprocesseur. Le processeur 31 peut notamment être un composant d'un circuit intégré, notamment un composant d'un microcontrôleur, un composant d'un FPGA (Field-Programmable Gate Array) ou un composant d'un ASIC (Application-Specific Integrated circuit).

La mémoire 32 peut stocker des instructions de code exécutées par le processeur 31. La mémoire 32 peut par exemple comprendre une mémoire ROM (Read-Only Memory), une mémoire RAM (Random Access Memory), une mémoire EEPROM (Electrically Erasable Programmable Read-Only Memory) ou tout autres types de moyens de stockage adaptés. La mémoire 32 peut par exemple comprendre des moyens de stockage optique, électronique ou encore magnétique.

Le serveur média 3 peut également comprendre un module de communication (non représenté) permettant d'établir un canal de communication avec le premier terminal 2a. Le module de communication peut comprendre une API WebRTC et/ou un module WebSocket pour communiquer avec une API ou un module correspondant du premier terminal 2a. Ces modules peuvent être implémentés par le processeur 31 du serveur média 3.

Il est maintenant décrit en référence aux figures 5 à 9 des exemples de procédé d'échange de données chiffrées de bout en bout entre le premier terminal 2a et le deuxième terminal 2b participant à une session de conférence gérée par le serveur média 3. Comme expliqué précédemment, le serveur média 3 transmet des flux de données multimédia aux participants à la session de conférence en temps réel. Par ailleurs, un canal de communication est établi entre le serveur média 3 et le navigateur BRO du premier terminal 2a. Les conditions d'établissement de ce canal de communication ont également été décrites précédemment.

Il doit être noté que les figures associées aux exemples de procédé 100 ne sont que des illustrations des exemples du procédé 100 représentant, par des blocs, les différentes opérations éventuellement comprises dans le procédé et décrites dans la suite du document. À ce titre, les illustrations ne traduisent aucune séquentialité entre les opérations. En d'autres termes, les opérations décrites en référence aux figures ne sont pas nécessairement mises en œuvre les unes à la suite des autres et peuvent notamment être mises en œuvre dans un ordre différent de celui représenté sur les figures, ou être mises en œuvre de manière parallèle, à moins qu'une opération donnée nécessite un résultat d'une autre opération pour être mise en œuvre. De la même façon, il n'est pas nécessaire que chaque opération soit mise en œuvre une fois avant qu'une même opération soit répétée une deuxième fois. La fréquence de mise en œuvre de chaque opération lui est propre et n'est pas nécessairement liée à la mise en œuvre des autres opérations.

Comme illustré par le bloc 110, l'exemple de procédé 100 comprend un premier chiffrement d'un flux multimédia à transmettre aux participants de la session de conférence. Le premier chiffrement 110 est effectué par le deuxième terminal 2b, par exemple par son processeur, à partir d'une première clé de chiffrement associée à la session de conférence. Les conditions d'obtention d'une clé de chiffrement associée à la session de conférence ont été décrites précédemment.

Comme illustré par le bloc 120, l'exemple de procédé 100 comprend un envoi à destination du serveur média 3 du flux multimédia chiffré. L'envoi est effectué par le deuxième terminal 2b, et peut par exemple être mis en œuvre par son processeur. Par conséquent, le serveur média 3 reçoit le flux multimédia chiffré par la première clé de chiffrement associée à la session de conférence du deuxième terminal 2b.

Comme illustré par le bloc 130, l'exemple de procédé 100 comprend un deuxième chiffrement du flux multimédia déjà chiffré. Le deuxième chiffrement est effectué par le serveur média 3, par exemple par son processeur 31, à partir d'une clé de chiffrement négociée entre le navigateur BRO du premier terminal 2a et le serveur média 3 pour communiquer sur le canal de communication. Des détails sur la clé de chiffrement négociée entre le navigateur BRO du premier terminal 2a et le serveur média 3 ont été décrits précédemment. On comprend donc qu'à l'issue du bloc 130, le flux multimédia transmis par le deuxième terminal 2b est chiffré par deux clés de chiffrement différentes, la première clé de chiffrement associée à la session de conférence, et la clé de chiffrement négociée entre le serveur média 3 et le navigateur BRO du premier terminal 2a.

Comme illustré par le bloc 130, l'exemple de procédé 100 comprend un envoi du flux multimédia à destination du premier terminal 2a. Le flux multimédia est envoyé par le serveur média 3, par exemple suite à une commande de son processeur 31, et correspond au flux multimédia chiffré à deux reprises par les deux clés de chiffrement. Le flux multimédia chiffré deux fois est envoyé sur le canal de communication établi entre le serveur média 3 et le navigateur BRO du premier terminal 2a.

Ainsi, le procédé 100 selon la présente divulgation permet l'envoi d'un flux multimédia chiffré de bout en bout entre un premier terminal 2a participant à la session de conférence via son navigateur, et un deuxième terminal 2b participant également à la session de conférence. Le flux multimédia n'est pas déchiffré au niveau du serveur média 3 avant d'être retransmis sur le canal de communication établi entre le serveur média 3 et le navigateur du premier terminal 2a.

Dans des exemples et comme illustré par le bloc 150, le procédé 100 peut en outre comprendre un premier déchiffrement du flux multimédia reçu du serveur média 3. Le premier déchiffrement est effectué par le premier terminal 2a, par exemple par son processeur, à partir de la clé de chiffrement négociée entre son navigateur BRO et le serveur média 3.

Dans des exemples et comme illustré par le bloc 160, le procédé 100 peut en outre comprendre un deuxième déchiffrement du flux multimédia déjà déchiffré une première fois lors du bloc 150. Le deuxième déchiffrement est effectué par le premier terminal 2a, par exemple par son processeur, à partir d'une deuxième clé de chiffrement permettant de déchiffrer un flux multimédia chiffré par la première clé de chiffrement.

Dans une première option où le chiffrement est symétrique, la deuxième clé de chiffrement peut correspondre à la première clé de chiffrement. Dans une deuxième option où le chiffrement est asymétrique, la première clé de chiffrement peut correspondre à la clé publique du deuxième terminal 2b, et la deuxième clé de chiffrement peut correspondre à la clé privée associée à la clé publique du deuxième terminal 2b.

Des exemples de procédé 100 comprenant le premier et le deuxième déchiffrement sont notamment illustrés sur la figure 6.

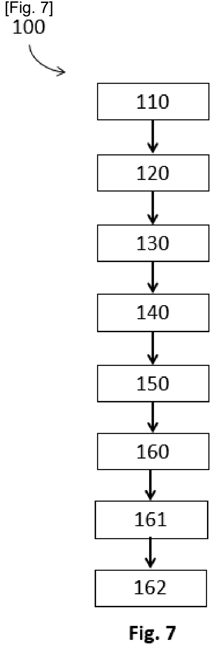

Dans des exemples, le bloc 160 de deuxième déchiffrement peut comprendre un bloc 161 et un bloc 162. Ces exemples sont notamment illustrés sur la figure 7.

Le bloc 161 peut correspondre à un chargement d'un fichier bytecode comprenant une fonction de déchiffrement d'un flux de données. Le chargement peut notamment être effectué par le moteur JavaScript JM du navigateur BRO du premier terminal 2a à partir du module bytecode BC. Le fichier bytecode peut notamment être un fichier WebAssembly, comme expliqué précédemment.

Le bloc 162 peut correspondre à une exécution de la fonction de déchiffrement sur le flux multimédia déjà déchiffré une première fois. L'exécution de la fonction de déchiffrement peut notamment être opérée par le moteur JavaScript JM du navigateur BRO du premier terminal 2a à partir du module bytecode BC. La fonction de déchiffrement du flux de données du fichier bytecode peut ainsi s'appuyer sur la deuxième clé de chiffrement permettant de déchiffrer un flux multimédia chiffré par la première clé de chiffrement pour opérer le déchiffrement.

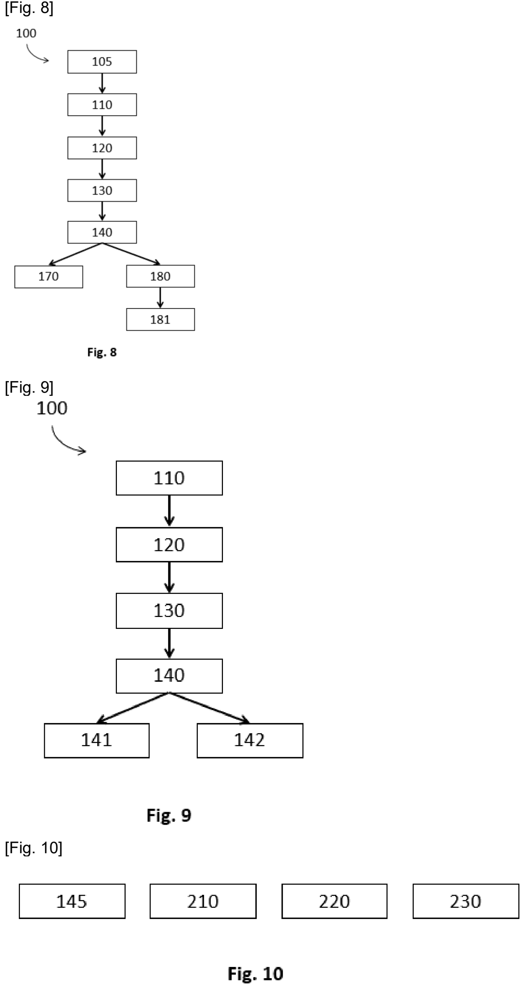

Dans des exemples, le procédé 100 peut en outre comprendre un encodage du flux multimédia à partir du premier codec. Cet encodage est représenté par le bloc 105 sur la figure 8. L'encodage est effectué par le deuxième terminal 2b, notamment avant le premier chiffrement proposé par le bloc 110. Par conséquent, lorsque le flux multimédia est reçu par le premier terminal 2a, il est encodé par le premier codec en plus d'être chiffré par deux clés de chiffrement différentes.

Dans des exemples comprenant le bloc 105 et dans une première alternative où le premier codec appartient à la pluralité de codecs pris en charge par le module de codage E/D du navigateur BRO du premier terminal 2a, le procédé 100 peut en outre comprendre un décodage du flux multimédia à partir du module de codage du navigateur BRO. Le décodage est illustré par le bloc 170 sur la figure 8. Cette première alternative permet un décodage via le module de décodage E/D du navigateur BRO qui s'exécute plus rapidement que le décodage de la deuxième alternative présenté ci-dessous dans la mesure où il peut être directement effectué dans l'environnement natif du processeur du premier terminal 2a. En revanche, le module de décodage E/D du navigateur est limité à un certain nombre de codecs, et ne permet notamment pas la prise en charge de codecs très utilisés tels que l'AMR-WB.

Dans des exemples comprenant le bloc 105 et dans une deuxième alternative où le premier codec n'appartient pas à la pluralité de codecs pris en charge par le module de codage E/D du navigateur BRO du premier terminal 2a, le procédé 100 peut en outre comprendre un bloc 180 et un bloc 181, comme illustré sur la figure 8.

Le bloc 180 peut correspondre à un chargement d'un fichier bytecode comprenant une fonction de décodage d'un flux de données encodé à partir du premier codec. Le fichier bytecode peut être un fichier WebAssembly. Le fichier bytecode peut être le même que celui comprenant la fonction de déchiffrage qui est chargé lors du bloc 161 ou il peut s'agir d'un fichier différent. Lorsque c'est le même fichier, il n'est pas nécessaire de le charger deux fois. Le chargement du fichier bytecode peut notamment être opéré par le moteur JavaScript JM du navigateur BRO du premier terminal 2a à partir du module bytecode BC.

Le bloc 181 peut correspondre à une exécution de la fonction de décodage du flux multimédia encodé par le premier codec et chargé lors du bloc 180. L'exécution de la fonction de décodage peut notamment être implémentée par le moteur JavaScript JM du navigateur BRO du premier terminal 2a à partir du module bytecode BC.

Dans cette deuxième alternative, dans la mesure où la fonction de décodage est exécutée par le moteur JavaScript JM du navigateur BRO, cette fonction n'est pas exécutée directement par le processeur du premier terminal 2a, mais est exécutée par l'intermédiaire du moteur JavaScript JM qui est simulé par ce processeur. Dans la mesure où l'exécution de la fonction de décodage est implémentée dans un environnement simulé par le processeur, et non pas directement dans l'environnement natif du processeur, le décodage n'est pas effectué aussi rapidement que dans la première alternative. En revanche, cette deuxième alternative permet de décoder des flux multimédia encodés par des codecs non pris en charge par le module de codage E/D, de sorte que n'importe quel codec peut être utilisé pour la session de conférence.

Dans une première option dans laquelle le canal de communication entre le serveur média 3 et le navigateur BRO est établi à partir d'une API WebRTC, le bloc 140 d'envoi du flux multimédia du serveur média 3 au navigateur BRO du premier terminal 2a peut comprendre un bloc 141. Le bloc 141 peut comprendre une écriture du flux multimédia dans un canal de données (DataChannel) de l'API WebRTC créé entre le serveur média 3 et le navigateur BRO. Comme expliqué précédemment, c'est l'écriture du flux multimédia dans un canal de données (DataChannel) de l'API WebRTC qui permet de ne pas opérer de déchiffrement du flux multimédia au niveau du serveur média 3.

Dans une deuxième option dans laquelle le canal de communication entre le serveur média 3 et le navigateur BRO est établi à partir d'un protocole Websocket, le bloc 140 d'envoi du flux multimédia du serveur média 3 au navigateur BRO du premier terminal 2a peut comprendre un bloc 142. Le bloc 142 peut comprendre une écriture du flux multimédia dans le canal de communication établi selon le protocole WebSocket. Le canal de communication établi selon le protocole WebSocket est ouvert entre le serveur média 3 et le navigateur BRO du premier terminal.

Ces deux alternatives comprenant les blocs 141 et 142 sont notamment représentées en figure 9.

Il est désormais présenté, en référence à la figure 10, des exemples de configurations d'un terminal selon la présente divulgation. Le terminal est adapté pour participer à une session de conférence gérée par un serveur média 3. Il comprend un navigateur BRO qui peut comprendre l'un quelconque des éléments présentés pour le premier terminal 2a. Un canal de communication est établi entre le serveur média 3 et le navigateur BRO du terminal.

Le terminal peut être configuré pour mettre en œuvre au moins l'une quelconque des opérations présentées ci-dessous, par exemple par le biais de son processeur. Par ailleurs, le terminal peut être configuré pour mettre en œuvre au moins une opération effectuée par le premier terminal 2a et décrite implicitement ou explicitement en référence à l'un quelconque des exemples de procédés 100 de la présente divulgation. Les opérations déjà décrites comme étant effectuées par le premier terminal 2a dans les différents exemples de procédé 100 ne sont pas décrites à nouveau ici pour des besoins de concisions.

Le terminal peut être configuré pour établir un canal de communication entre son navigateur BRO et le serveur média 3. Des exemples de modules ou d'API permettant d'établir un tel canal ont été décrits dans la présente divulgation. Cette opération d'établissement d'un canal de communication est représentée par le bloc 145 sur la figure 10.

Le terminal peut être configuré pour effectuer un premier chiffrement d'un flux multimédia qu'il a acquis, par exemple par l'intermédiaire de son microphone 23 ou de sa caméra 24. Le premier chiffrement est effectué à partir d'une troisième clé de chiffrement associée à la session de conférence. Dans une première option où le chiffrement est symétrique, la troisième clé de chiffrement peut correspondre à la clé de chiffrement de la session de conférence. Dans une deuxième option où le chiffrement est asymétrique, la troisième clé de chiffrement peut correspondre à la clé publique du terminal. Auquel cas, le flux multimédia chiffré par la clé publique du terminal pourra être déchiffré à partir de la clé privée associée à la clé publique de ce terminal, comme expliqué précédemment. Cette opération de premier chiffrement est représentée par le bloc 210 sur la figure 10.

Le terminal peut être configuré pour effectuer un deuxième chiffrement du flux multimédia déjà chiffré une première fois par la troisième clé de chiffrement. Le deuxième chiffrement est effectué à partir d'une clé de chiffrement négociée entre son navigateur BRO du terminal et le serveur média 3. On comprend que la clé de chiffrement négociée utilisée ici dépend de la façon dont est établi le canal de communication entre le navigateur BRO et le serveur média, notamment s'il s'agit d'un canal de communication établi selon le protocole WebSocket, ou à partir de l'API WebRTC. Cette opération de deuxième chiffrement est représentée par le bloc 220 sur la figure 10.

Le terminal peut être configuré pour transmettre un flux multimédia chiffré une première fois à partir de la troisième clé de chiffrement et une deuxième fois à partir de la clé de chiffrement négociée entre le navigateur BRO du terminal et le serveur média. Cette opération de transmission du flux multimédia chiffré par deux clés de chiffrement différentes est représentée par le bloc 230 sur la figure 10.

Dans une première alternative, le bloc 230 de transmission du flux multimédia chiffré à deux reprises peut par exemple comprendre une écriture du flux multimédia chiffré à deux reprises dans le canal de communication liant son navigateur et le serveur média 3 ouvert conformément au protocole WebSocket.

Dans une deuxième alternative, le bloc 230 de transmission du flux multimédia chiffré à deux reprises peut par exemple comprendre une écriture du flux multimédia chiffré à deux reprises dans un canal de données du canal de communication liant son navigateur et le serveur média 3 créé à partir de l'API WebRTC.

Les exemples de configurations du terminal selon la présente divulgation permettent donc au terminal d'envoyer et de recevoir des flux chiffrés à partir de son navigateur dans le cadre d'une session de conférence sans que ces flux ne soient déchiffrés par le serveur média 3. Ainsi, les configurations du terminal selon la présente divulgation permettent d'appliquer un chiffrement de bout en bout des communications.

La demande de brevet porte en outre sur un serveur média 3 selon l'une quelconque des configurations présentées par la présente divulgation. Le serveur média 3 peut être configuré pour mettre en œuvre au moins l'une quelconque des opérations présentées en référence aux exemples de procédé 100, par exemple par le biais de son processeur 31.

Ainsi, le serveur média selon la présente divulgation permet de proposer un chiffrement de bout en bout des flux multimédias échangés par les terminaux participants à la session de conférence qu'il gère, et ce même si des terminaux échangent des flux multimédias par l'intermédiaire de leur navigateur.

La demande porte en outre sur un produit programme d'ordinateur comportant des instructions pour la mise en œuvre de l'une quelconque des configurations d'un terminal ou d'un serveur média présentées par la présente divulgation lorsque cette configuration est implémentée par un processeur.

Enfin, la demande porte sur un support d'enregistrement non transitoire lisible par un ordinateur sur lequel est enregistré un programme pour la mise en œuvre l'une quelconque des configurations d'un terminal ou d'un serveur média présentées par la présente divulgation lorsque cette configuration est implémentée par un processeur.

Les différents exemples et configurations décrits dans la présente demande de brevet peuvent éventuellement être combinés pour réaliser d'autres exemples ou configurations. Par ailleurs, dans les revendications qui suivent, les termes utilisés ne doivent pas être interprétés comme limitant ces revendications aux exemples ou configurations spécifiques divulgués dans la description, mais doivent être interprétés comme incluant tous les exemples et toutes les configurations possibles ainsi que tout élément équivalent à un élément indiqué dans les revendications.

## Revendications

1. Procédé (100) d'échange de données chiffrées de bout en bout entre un premier terminal (2a) et un deuxième terminal (2b) participant à une session de conférence gérée par un serveur média (3) dans lequel un canal de communication est établi entre le serveur média (3) et un navigateur (BRO) du premier terminal (2a), et dans lequel le procédé comprend :
un premier chiffrement (110), par le deuxième terminal (2b), d'un flux multimédia, à partir d'une première clé de chiffrement associée à la session de conférence ;
un envoi (120), par le deuxième terminal (2b) à destination du serveur média (3), du flux multimédia chiffré;
un deuxième chiffrement (130), par le serveur média (3), du flux multimédia déjà chiffré à l'aide d'une clé de chiffrement négociée entre le navigateur (BRO) du premier terminal (2a) et le serveur média (3) pour communiquer sur le canal de communication ; puis
un envoi (140), par le serveur média (3) à destination du premier terminal (2a), du flux multimédia.

2. Procédé selon la revendication précédente, comprenant en outre :
un premier déchiffrement (150), par le premier terminal (2a), du flux multimédia reçu du serveur média (3), à partir de la clé de chiffrement négociée entre le navigateur (BRO) du premier terminal (2a) et le serveur média (3) ; et
un deuxième déchiffrement (160), par le premier terminal (2a), du flux multimédia à partir d'une deuxième clé de chiffrement permettant de déchiffrer un flux multimédia chiffré par la première clé de chiffrement.

3. Procédé selon la revendication précédente, dans lequel le deuxième déchiffrement (160) comprend :
un chargement (161) d'un fichier bytecode comprenant une fonction de déchiffrement d'un flux de données ; et
une exécution (162) de la fonction de déchiffrement sur le flux multimédia.

4. Procédé selon l'une quelconque des revendications précédentes, dans lequel le navigateur (BRO) du premier terminal (2a) comprend en outre un module de codage (E/D) permettant d'encoder ou de décoder des flux multimédia à partir d'une pluralité de codecs, dans lequel le procédé comprend en outre :
un encodage (105), par le deuxième terminal (2b), du flux multimédia à partir d'un premier codec ; et
lorsque le premier codec appartient à la pluralité de codecs :
un décodage (170) du flux multimédia à partir du module de codage (E/D) du navigateur (BRO).

5. Procédé selon la revendication précédente, dans lequel lorsque le premier codec n'appartient pas à la pluralité de codecs pris en charge par le module de codage (E/D), le procédé comprend en outre :
un chargement (180) d'un fichier bytecode comprenant une fonction de décodage d'un flux de données encodé à partir du premier codec; et
une exécution (181) de la fonction de décodage sur le flux multimédia encodé par le premier codec.

6. Procédé selon l'une quelconque des revendications précédentes, dans lequel le canal de communication entre le serveur média (3) et le navigateur (BRO) est établi conformément à un protocole WebSocket ;
dans lequel un envoi (140), par le serveur média (3) à destination du premier terminal (2a), du flux multimédia par le canal de communication établi entre le serveur média (3) et le navigateur (BRO) du premier terminal comprend :
une écriture du flux multimédia dans le canal de communication établi entre le serveur média (3) et le navigateur (BRO).

7. Terminal (2a) adapté pour se connecter à une session de conférence gérée par un serveur média (3), le terminal (2a) comprenant un navigateur (BRO), dans lequel le terminal est configuré pour :
appliquer un premier chiffrement (210) d'un flux multimédia à partir d'une troisième clé de chiffrement associée à la session de conférence ;
appliquer un deuxième chiffrement (220) du flux multimédia chiffré à partir de la troisième clé de chiffrement, à partir d'une clé de chiffrement négociée entre le navigateur (BRO) et le serveur média (3) pour chiffrer les flux multimédia échangés entre le serveur média (3) et le navigateur (BRO); et
transmettre (230) le flux multimédia chiffré au serveur média (3).

8. Terminal selon la revendication précédente, dans lequel le terminal est également configuré pour :
obtenir (145), du serveur média (3), un flux multimédia chiffré une première fois à partir d'une première clé de chiffrement d'un autre terminal participant à la conférence, et chiffré une deuxième fois à partir d'une clé de chiffrement négociée entre le navigateur (BRO) et le serveur média (3) pour chiffrer les flux multimédia échangés entre le serveur média (3) et le navigateur (BRO);
appliquer un premier déchiffrement (150) du flux multimédia reçu du serveur média (3), à partir de la clé de chiffrement négociée entre le navigateur (BRO) et le serveur média (3) ; et
appliquer un deuxième déchiffrement (160) du flux multimédia reçu du serveur média (3), à partir d'une deuxième clé de chiffrement permettant de déchiffrer un flux multimédia chiffré par la première clé de chiffrement.

9. Terminal (2a) selon la revendication 8, dans lequel l'application du deuxième déchiffrement (160) du flux multimédia comprend :
un chargement (161) d'un fichier bytecode comprenant une fonction de déchiffrement d'un flux de données ; et
une exécution (162) de la fonction de déchiffrement sur le flux multimédia.

10. Serveur média (3), configuré pour gérer une session de conférence à laquelle au moins un premier terminal (2a) et un deuxième terminal (2b) participent, dans lequel le serveur média (3) est configuré pour :
recevoir, du deuxième terminal (2b), un flux multimédia chiffré à transmettre aux autres participants à la session de conférence; et
appliquer un chiffrement (130) du flux multimédia déjà chiffré à l'aide d'une clé de chiffrement négociée avec un navigateur (BRO) du premier terminal (2a).
